(19) **Europäisches Patentamt** / **European Patent Office** / **Office européen des brevets**

(11) **EP 4 764 755 A1**

(12) **EUROPEAN PATENT APPLICATION**
published in accordance with Art. 153(4) EPC

(43) Date of publication:
**24.06.2026 Bulletin 2026/26**

(21) Application number: **24904354.8**

(22) Date of filing: **10.12.2024**

(51) International Patent Classification (IPC):
*G05B 23/02* (2006.01)  *G06F 18/23* (2023.01)

(52) Cooperative Patent Classification (CPC):
**G05B 23/02; G06F 18/23**

(86) International application number:
**PCT/KR2024/096645**

(87) International publication number:
**WO 2025/127789 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.12.2023 KR 20230179446**

(71) Applicant: **LG Energy Solution, Ltd.
Seoul 07335 (KR)**

(72) Inventors:
• **HONG, Jun Hyeok
Daejeon 34122 (KR)**
• **MIN, Kyoung Choon
Daejeon 34122 (KR)**

(74) Representative: **BCKIP Part mbB
Landsberger Straße 98
80339 München (DE)**

(54) **PNEUMATIC EQUIPMENT AND METHOD FOR MONITORING PNEUMATIC EQUIPMENT**

(57)    Disclosed herein relates to a pneumatic equipment monitoring method. The method includes: collecting a dataset of a plurality of operating variables of a pneumatic equipment including a plurality of pneumatic components; and generating an equipment monitoring model, wherein the equipment monitoring model is generated by clustering the dataset of the plurality of operating variables based on density.

[FIG. 2]

| | |
|---|---|
| COLLECTING DATASET OF OPERATING VARIABLES | P110 |
| PRE-PROCESSING DATASET OF OPERATING VARIABLES | P120 |
| GERNERATING EQUIPMENT STATUS MONITORING MODEL | P130 |
| MONITORING SECONDARY BATTERY MANUFACTURING EQUIPMENT | P140 |

EP 4 764 755 A1

## Description

[Technical Field]

The present disclosure relates to a pneumatic equipment and a method of monitoring a pneumatic equipment. This application claims the benefit of Korean Patent Application No. 10-2023-0179446, filed on December 12, 2023, the disclosure of which is incorporated herein by reference.

[Background]

Unlike primary batteries, secondary batteries can be charged and discharged a plurality of times. Secondary batteries are widely used as an energy source for various wireless devices such as handsets, laptops, and cordless vacuum cleaners. In recent years, the primary use of secondary batteries has shifted from mobile devices to mobility, as improved energy density and economies of scale have dramatically reduced the manufacturing cost per unit capacity of secondary batteries and increased the range of battery electric vehicles (BEVs) to be on par with fuel vehicles.

In the production of a secondary battery, a pneumatic equipment is used for the handling and transferring of materials (e.g., battery cells or electrode semi-finished products). Pneumatic equipment is difficult to control precisely, and failures are difficult to predict in advance. Therefore, various studies are being conducted to predict the failure of pneumatic equipment in advance to prevent yield degradation in secondary battery manufacturing and improve throughput.

[Summary]

[Technical Problem]

The problem that the technical ideas of the present disclosure seek to solve is to provide a pneumatic equipment and a method of monitoring the pneumatic equipment.

[Technical Solution]

According to exemplary embodiments of the present disclosure to address the above problem, a method of monitoring a pneumatic equipment is provided. The method includes: collecting a dataset of a plurality of operating variables of a pneumatic equipment including a plurality of pneumatic components; and generating an equipment monitoring model, wherein the equipment monitoring model is generated by clustering the dataset of the plurality of operating variables based on density.

The dataset of the plurality of operating variables is clustered based on Mean shift Clustering.

The method further includes: collecting data points of the plurality of operating variables of the pneumatic equipment; and monitoring the pneumatic equipment based on the data points and the equipment monitoring model.

The monitoring of the pneumatic equipment includes calculating a score indicative of the status of the pneumatic equipment based on the distance of the data points from normal clusters determined based on clustering of a dataset of the plurality of operating variables.

The method further includes generating an alarm based on the score.

The method further includes pre-processing the dataset of the plurality of operating variables.

The pre-processing the dataset of the plurality of operating variables of the pneumatic equipment classifies the dataset of the plurality of operating variables of the pneumatic equipment based on an operational status of the pneumatic equipment.

The dataset of the plurality of operating variables is categorized into a normal dataset of the plurality of operating variables and a fault dataset of the plurality of operating variables.

The normal dataset of the plurality of operating variables includes an optimal dataset of the plurality of operating variables.

The model is generated based on the normal dataset of the plurality of operating variables.

The pre-processing of the dataset of the plurality of operating variables standardizes the dataset of the plurality of operating variables of the pneumatic equipment.

The pre-processing of the dataset of the plurality of operating variables removes the duplicates and missing data of the dataset of the plurality of operating variables of the pneumatic equipment.

The pre-processing of the dataset of the plurality of operating variables synchronizes the time of the dataset of the plurality of operating variables of the pneumatic equipment.

According to exemplary embodiments, a pneumatic equipment is provided. The equipment includes: a plurality of pneumatic components; a sensor configured to detect a plurality of operating variables of the plurality of pneumatic components; and a processor configured to collect a dataset of the plurality of operating variables, wherein the processor includes an equipment monitoring model generated by clustering of the dataset of the plurality of operating variables.

The equipment monitoring model is generated by clustering the dataset of the plurality of operating variables based on density.

The dataset of the plurality of operating variables is clustered based on Mean shift Clustering.

The processor is configured to monitor the pneumatic equipment based on data points of the plurality of operating variables of the pneumatic equipment and the equipment monitoring model.

The processor is configured to calculate distances of the data points from normal clusters determined based on clustering of the dataset of the plurality of operating variables.

The processor is configured to calculate a score indicative of the status of the pneumatic equipment based on the distances of the data points from the normal clusters.

The processor is configured to generate an alarm based on the score.

[Advantageous Effects]

In accordance with exemplary embodiments of the present disclosure, a method of monitoring a pneumatic system may cluster normal data of a plurality of operating variables of the pneumatic equipment and calculate distances of data points of the plurality of operating variables occurring in real time from the determined clusters. The method of monitoring a pneumatic equipment, according to exemplary embodiments, may generate an alarm or control the operation of the pneumatic equipment based on a change in a score calculated from the distances, thereby providing a prediction of a status of the pneumatic equipment (e.g., normal and faulty).

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

[Brief Description of the Drawings]

FIG. 1 is block diagrams illustrating a pneumatic equipment according to exemplary embodiments.
FIG. 2 is a flowchart illustrating a method of monitoring an equipment, according to exemplary embodiments.
FIGS. 3 through 8 are diagrams to illustrate an example of a plurality of operating variables measured by a plurality of sensors.
FIGS. 9 and 10 illustrate example datasets of the plurality of operating variables.
FIG. 11 is a graph to illustrate a method of monitoring an equipment according to exemplary embodiments.
FIG. 12 illustrates a variation of a score according to an experimental example.

[Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

(First and Second Embodiment)

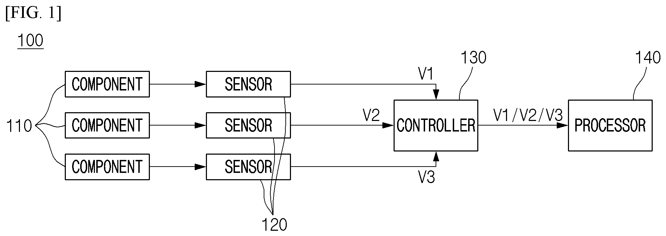

FIG. 1 is a block diagram illustrating a pneumatic equipment 100 according to exemplary embodiments.

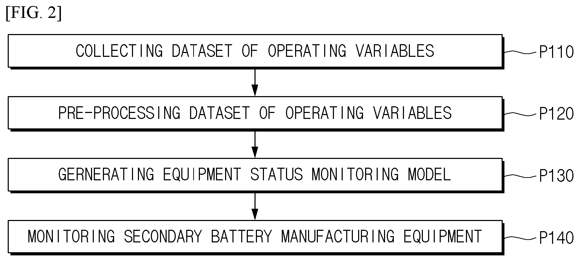

FIG. 2 is a flowchart illustrating a method of monitoring an equipment according to exemplary embodiments.

Referring to FIGS. 1 and 2, at P110, a dataset of a plurality of operating variables V1 , V2, and V3 may be collected.

The pneumatic equipment 100 may be configured to perform a manufacturing process, for example, of a secondary battery. The pneumatic equipment 100 may be configured to perform any one among, for example, a mixing process, an electrode process, an assembly process, and an activation process. The pneumatic equipment 100 may include a plurality of pneumatic components 110, sensors 120, a controller 130, and a processor 140.

The electrode process may include a coating process, a roll pressing process, and a slitting process. In a coating process, an electrode sheet may be coated with an electrode slurry. The electrode slurry may include an active material, a conductor, a binder, and a solvent. By dissolving the active material, the conductor, and the binder in a solvent, the electrode slurry may be provided.

In a roll pressing process, electrode sheets coated with the electrode slurry may be passed between pressing rolls. The roll pressing process can flatten the surface of the electrode sheet and improve the coupling of the active material on the electrode sheet to the current collector. The electrode sheet may be separated into a plurality of electrode sheets by a slitting process. The slitting process may be a selective process. Depending on the specifications of the electrode assembly of the battery cell to be ultimately manufactured, the slitting process of the slitting device may be omitted. The finished electrode rolls from the slitting device may be processed by a winding device or a notching device. Accordingly, a stack-type electrode assembly or a cylindrical electrode assembly may be provided.

The notching process may be performed on the electrode sheet after it has been ejected from the electrode roll by a rewinder. In the notching process, electrode tabs may be formed on the non-coated part of the electrode sheet. In the notching process, V-shaped grooves may be further formed on the electrode sheet. In the lamination process, the individualized unit electrodes may be coupled to the separator. In the lamination process, the separator and the unit electrodes may be heat treated to increase the coupling force between the separator and the unit electrodes. The lamination process may provide a half cell or a mono cell. A bi-cell or the like may also be provided by the lamination process. A half cell may include a separator and a positive electrode, or may include a separator and a negative electrode. A mono cell may include a positive electrode, a first separator, a negative electrode, and a second separator stacked in sequence. In the stacking process, at least one among the half cell, mono cell, and bi-cell may be stacked repeatedly. An electrode assembly may be provided by the stacking process. The electrode assembly may include tape for fixing the positive electrodes and negative electrodes. In a folding process, half cells, mono cells, and bi-cells may be wound around a separator. A packaging process may include inserting the electrode assembly into the case, filling the electrolyte, and sealing the case.

The activation process may include charging and discharging, an aging process, a degassing process, performance testing, and open circuit voltage (OCV) based testing. In the activation process, an SEI film may be formed on the negative electrode surface by the initial charge. An SEI film is a thin film that forms on the surface of the negative electrode material when the battery cell is first charged after manufacture. When a battery cell is charged, the lithium ions in the battery cell migrate to the negative electrode, and in the process, a Solid Electrolyte Interphase (SEI) film can be formed on the surface of the negative electrode material due to the chemical reaction that occurs when the materials in the electrolyte are electrolyzed for the first time. The SEI can be a type of separator. As lithium ions move from the positive electrode to the negative electrode to charge the battery, the SEI can prevent further degradation reactions in the electrolyte. In an aging process, a charged or discharged battery cell may be stored at room temperature for a predetermined period of time (e.g., 30 minutes to 3 hours, as a non-limiting example) to stabilize the battery cell. The purpose of the aging process is to evenly distribute the electrolyte within the pouch cell, such that the electrolyte evenly permeates both the positive electrode and negative electrode. The mobility of the lithium ions can be improved by the aging process. The charge-discharge and aging processes can generate gases inside the battery cell. In the degassing process, the gases inside the battery cell can be removed. Performance testing can include capacity testing and inspection for defect screening. An OCV-based inspection may screen battery cells for low voltage defects. A low voltage defect in a battery cell may be caused by a metal foreign object located inside the battery cell. For example, if the positive pole plate of a battery cell contains metal foreign object such as iron or copper, these metal foreign object can grow on the negative electrode as dendrites. Dendrites cause unwanted short circuits inside the battery cell, which can lead to battery cell failure and ignition.

Each of the plurality of pneumatic components 110 may be configured to operate under pneumatic pressure, or to induce and control pneumatic pressure applied to another element. The plurality of pneumatic components 110 may include actuation devices such as pneumatic cylinders, rotary actuators and air chucks, and directional control devices such as solenoid valves and mechanical valves. The solenoid valves can redirect compressed air, thereby determining forward and retraction motions of the actuating components. The plurality of pneumatic components 110 may further include an electronic device, such as a servo motor. A servo motor may function similarly to a pneumatic cylinder, but may provide more precise control than a pneumatic cylinder.

The plurality of sensors 120 may be configured to detect motion of the plurality of pneumatic components 110. The plurality of sensors 120 may be configured to determine a plurality of operating variables V1, V2, V3 of the plurality of pneumatic components 110.

The controller 130 may be configured to control the plurality of pneumatic components 110. The controller 130 may be configured to receive signals indicative of the plurality of operating variables V1, V2, V3 from the plurality of sensors 120. The controller 130 may be configured to determine a status of the plurality of pneumatic components 110. For example, the controller 130 may be configured to collect data including error codes indicating whether some of the plurality of pneumatic components 110 are in a normal operating state or in a fault state. The controller 130 may be configured to send signals indicative of the plurality of operating variables V1, V2, V3 to the processor 140.

Here, the controller 130 may be a programmable logic controller (PLC). A PLC is a specialized form of microprocessor-based controller that uses programmable memory to store instructions and instantiate functions such as logic, sequencing, timing, counting, and arithmetic to control machines and processes. PLCs are easy to operate and program.

The controller 130 may include a power supply, a CPU, input interfaces, output interfaces, communication interfaces, and memory devices. The power supply may be configured to provide power to the other elements of the controller 130, such as the CPU, input interfaces, output interfaces, communication interfaces, and memory devices, for operation of the controller 130. The memory devices may include read only memory (ROM) configured to store system programs, such as an operating system, and random access memory (RAM) configured to store user programs and data, such as status information of input and output devices, timers, counters, and values of other internal devices. The CPU may be configured to control communication between modules that instantiate logic and convert input signals into output motion signals. The CPU may operate based on system programs and user programs stored in memory devices. The CPU may be configured to write or read inspection data and measurement data to and from data areas of the memory devices based on the system programs and user programs. Conditions or data from industrial devices and production processes may be transmitted to the CPU via an input module. The results processed by the CPU can be sent to the actuator via the output module. The communication interface may be configured to relay data to and from the controller 130 and the processor 140.

However, without limitation, the controller 130 may include any of the following: a simple controller, a complex processor such as a microprocessor, CPU, GPU, or the like, a processor configured by software, or dedicated hardware and firmware. The controller 130 may be instantiated by, for example, a general purpose computer or application specific hardware such as a digital signal processor (DSP), field programmable gate array (FPGA), and application specific integrated circuit (ASIC).

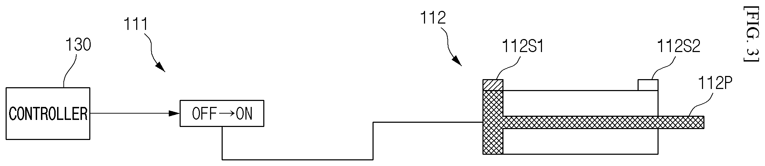

FIGS. 3 through 8 are illustrative drawings to describe an example of a plurality of operating variables V1, V2, V3 measured by a plurality of sensors 120. More specifically, FIGS. 3 through 8 illustrate the reciprocation of a pneumatic cylinder 112 in response to a control signal applied to a solenoid valve 111 from a controller 130.

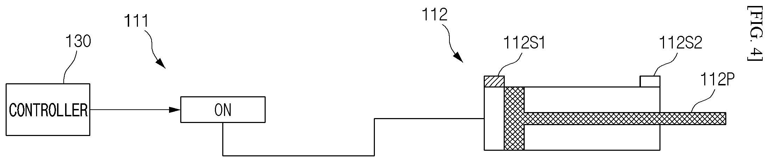

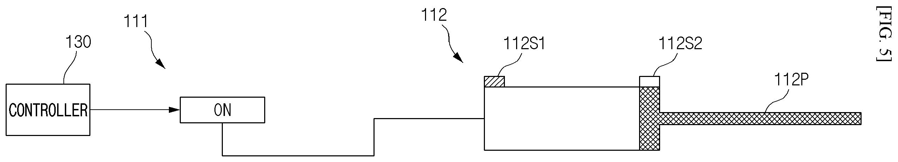

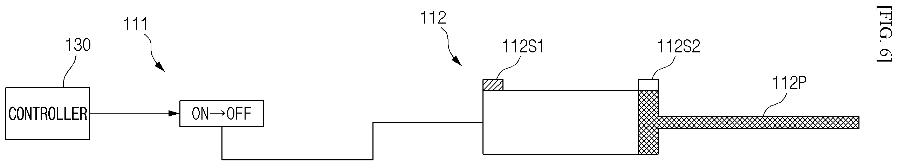

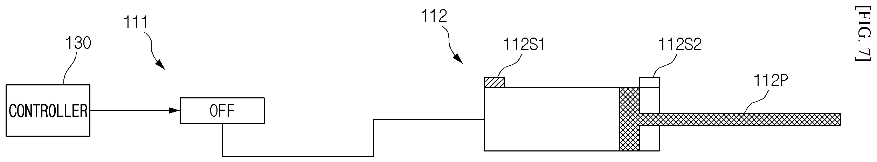

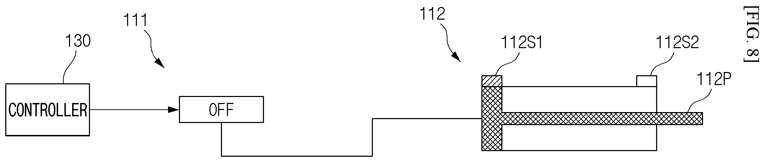

Referring to FIGS. 3 through 8, the pneumatic cylinder 112 may include first and second contact sensors 112S1, 112S2. As shown in FIGS. 3 and 8, when the pistol 112P of the pneumatic cylinder 112 is in the retracted position, the first contact sensor 112S1 may be in the on state and the second contact sensor 112S2 may be in the off state. As shown in FIGS. 5 and 6, when the pistol 112P of the pneumatic cylinder 112 is in the forward position, the first contact sensor 112S1 may be in the off state and the second contact sensor 112S2 may be in the on state. As shown in FIGS. 4 and 7, when the pistol 112P of the pneumatic cylinder 112 moves between the forward position and the retracted position, the first contact sensor 112S1 and the second contact sensor 112S2 may be in the off state.

In FIG. 3, the solenoid valve 111 may be switched from the off state to the on state. Accordingly, as shown in FIG. 4, the transition of the solenoid valve 111 to the on state may cause the pistol 112P of the pneumatic cylinder 112 to advance, causing the first contact sensor 112S1 to transition to the off state. The forward reaction time may be the time between the configuration of FIG. 3 and the configuration of FIG. 4. More specifically, the forward reaction time may be the time it takes for the pistol 112P of the pneumatic cylinder 112 to start advancing after the solenoid valve 111 is switched to the on state.

The time at which the solenoid valve 111 is switched to the on state may be determined as the time at which a control signal from the controller 130 controlling the solenoid valve 111 is sent to the solenoid valve 111. Accordingly, the forward reaction time may be a difference between a time when the control signal of the controller 130 controlling the solenoid valve 111 is sent to the solenoid valve 111 and a time when the first sensor 111S1 switches from the on state to the off state.

In FIG. 5, the pistol 112P of the pneumatic cylinder 112 may arrive at the forward position, thereby causing the second contact sensor 112S2 to switch to the on state. The forward travel time may be a time between the configuration in FIG. 4 and the configuration in FIG. 5. More specifically, the forward travel time may be the time taken for the pistol 112P to move to the forward position after the movement of the pistol 112P is initiated. The forward travel time may be the difference between a time when the first sensor 111S1 transitions from an on state to an off state, and a time when the second sensor 111S2 transitions from an off state to an on state.

In FIG. 6, the solenoid valve 111 may be switched from the on state to the off state. In FIG. 7, the switching of the solenoid valve 111 to the off state may cause the second contact sensor 112S2 to switch to the off state as the pistol 112P of the pneumatic cylinder 112 is retracted. The reverse reaction time may be a time between the configuration of FIG. 6 and the configuration of FIG. 7. More specifically, the reverse reaction time may be the time it takes for the pistol 112P of the pneumatic cylinder 112 to begin reversing after the solenoid valve 111 is switched to the off state.

The time at which the solenoid valve 111 is switched to the off state may be determined as the time at which a control signal from the controller 130 controlling the solenoid valve 111 is sent to the solenoid valve 111. Accordingly, the reverse reaction time may be a difference between a time when the control signal of the controller 130 controlling the solenoid valve 111 is sent to the solenoid valve 111 and a time when the second contact sensor 112S2 switches from the on state to the off state.

In FIG. 8, the pistol 112P of the pneumatic cylinder 112 may arrive at the retracted position, thereby causing the first contact sensor 112S1 to switch from the on state to the off state. The reverse travel time may be a time between the configuration in FIG. 7 and the configuration in FIG. 8. More specifically, the reverse travel time may be the time taken for the pistol 112P to move to the reverse position after the movement of the pistol 112P is initiated. The reverse travel time may be the difference between a time when the second sensor 111S2 transitions from an on state to an off state and a time when the first sensor 111S1 transitions from an off state to an on state.

While FIGS. 3 through 8 describe collecting a dataset of four plurality of operating variables from two pneumatic components, the dimensions of the data collected may vary depending on the number of sensors applied to the pneumatic components. For example, if one among the solenoid valve 111 and the pneumatic cylinder 112 is provided with a flow sensor and a pressure sensor, the flow sensor may sense the flow rate of one among the solenoid valve 111 and the pneumatic cylinder 112, and the pressure sensor may sense the pneumatic pressure of one among the solenoid valve 111 and the pneumatic cylinder 112. Accordingly, two additional pluralities of datasets of operating variables may be collected.

In another example, the pneumatic components 110 may include a vacuum chuck and a solenoid valve configured to regulate the pressure applied to the vacuum chuck. The plurality of sensors 120 may be configured to calculate an on-duty reaction time, an on-duty, an off-duty, and an off-duty reaction time of the vacuum chuck from the vacuum chuck and the solenoid valve. The on-duty and off-duty of the vacuum chuck may be determined based on a pressure sensor. At an on-duty of the vacuum chuck, a high air pressure may be applied to the vacuum chuck, and at an off-duty of the vacuum chuck, a low air pressure may be applied to the vacuum chuck. The on-duty reaction time and off-duty reaction time of the vacuum chuck may be the time from when the controller 130 sends a control signal to the solenoid valve to when the pressure applied to the vacuum chuck changes.

In another example, the pneumatic components 110 may include a servo motor, and the plurality of operating variables V1, V2, V3 may include a load factor of the servo motor. Here, the load factor of the servo motor may represent a ratio of the output of the servo motor to the maximum output of the servo motor. The load factor of the servo motor may be determined based on any one of a drive current of the servo motor or a drive power of the servo motor.

The plurality of sensors 120 may be configured to transmit the plurality of operating variables V1, V2, V3 to the processor 140. The processor 140 may be configured to collect a dataset of the plurality of operating variables V1, V2, V3. The plurality of operating variables V1, V2, V3 may be collected by the processor 140 via the controller 130. In another example, the processor 140 may be configured to load a dataset including the plurality of operating variables V1, V2, V3 stored on a server, such as an MES, data warehouse, and network attached storage.

Each of the data points in the dataset of the plurality of operating variables V1, V2, V3 may be a multidimensional quantity. Each of the dimensions of the data points in the dataset of the plurality of operating variables V1, V2, and V3 may correspond to a different plurality of operating variables V1, V2, and V3. For example, to collect a dataset of the plurality of operating variables V1, V2, V3, M plurality of operating variables may be extracted from N parts, in which case each of the data points of the dataset of the plurality of operating variables V1, V2, V3 may have a value in M dimensions. Here, N, M may each be an integer. M may be greater than N, but is not limited thereto.

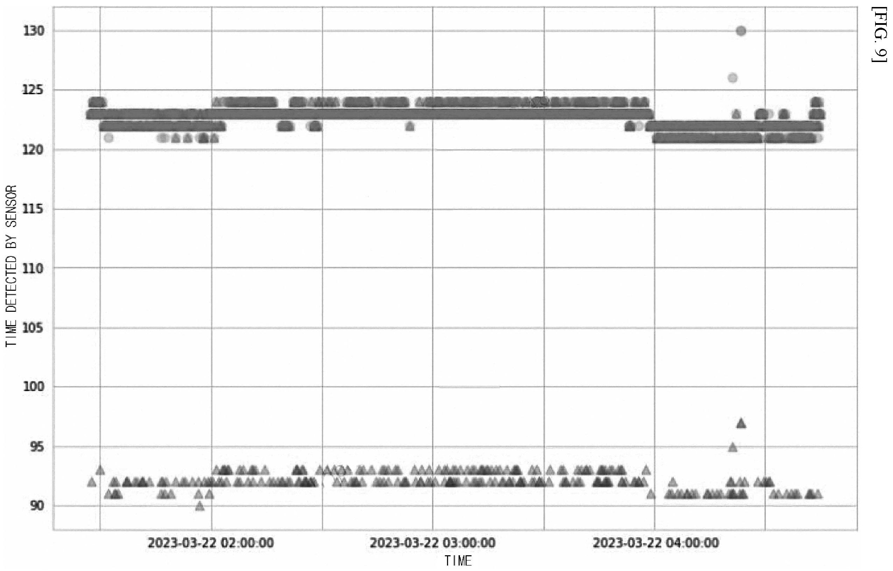

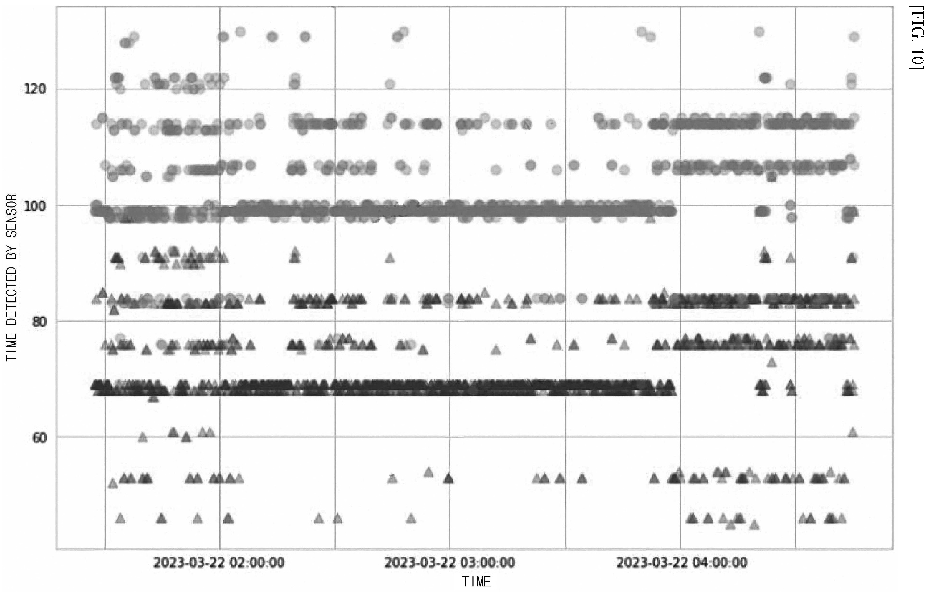

FIGS. 9 and 10 illustrate example datasets of a plurality of operating variables V1, V2, and V3. More specifically, FIG. 9 illustrates a forward reaction time and a forward travel time of an electrode transfer device, and FIG. 10 illustrates a forward reaction time and a forward travel time of an electrode tab cutting device. In FIGS. 9 and 10, the horizontal axis represents the date of collection of the data points, and the vertical axis is the time axis of the forward reaction time and the forward travel time. In FIGS. 9 and 10, the circular points represent the forward travel time and the triangular points represent the forward reaction time.

Referring to FIGS. 9 and 10, it is observed that the scatter (i.e., stratification) of the electrode tab cutting device with a relatively large number of parts is larger than the scatter of the electrode transfer device with a relatively small number of parts.

Referring again to FIGS. 1 and 2, at P120, a dataset of the plurality of operating variables V1, V2, and V3 may be pre-processed. The processor 140 may be configured to pre-process the dataset of the plurality of operating variables V1, V2, V3. Pre-processing the dataset of the plurality of operating variables V1, V2, V3 may include classifying the dataset of the plurality of operating variables V1, V2, V3, time synchronizing the dataset of the plurality of operating variables V1, V2, V3, normalizing the dataset of the plurality of operating variables V1, V2, V3, and removing duplicates and missing data in the dataset of the plurality of operating variables V1, V2, V3.

Classifying the dataset of the plurality of operating variables V1, V2, V3 may include determining a status of the pneumatic equipment 100 at the time the dataset of the plurality of operating variables V1, V2, V3 was collected. According to exemplary embodiments, the processor 140 may be configured to generate an equipment monitoring model based on a portion of the dataset of the plurality of operating variables V1, V2, V3 selected based on the classification of the dataset of the plurality of operating variables V1, V2, V3.

For example, the operational states of the pneumatic equipment 100 may include normal and faulty. If the controller 130 generates error codes for some of the plurality of pneumatic components 110, the operational state of the pneumatic equipment 100 may be faulty. Conversely, if no error codes are generated by the controller 130, the operational state of the pneumatic equipment 100 may be normal. Here, an error code may be recorded and collected by the controller 130 when a value of the sensors 120 exceeds a threshold upper limit or falls below a threshold lower limit. As a non-limiting example, the error codes may be transmitted by the controller 130 to a server, such as a manufacturing execution system (MES), and may be stored in the MES. The dataset of the plurality of operating variables V1, V2, V3 may include portions collected when the secondary battery manufacturing equipment is in a normal operational state, and the dataset of the plurality of operating variables V1, V2, V3 may include portions collected when the secondary battery manufacturing equipment is in a faulty operational state.

The portion of the dataset of the plurality of operating variables V1, V2, V3 that is collected when the secondary battery manufacturing equipment is in a normal operational state may be referred to as the normal dataset of the plurality of operating variables V1, V2, V3. The portion of the dataset of the plurality of operating variables V1, V2, and V3 collected when the secondary battery manufacturing equipment is in a faulty operational state may be referred to as the fault dataset of the plurality of operating variables V1, V2, and V3. In some cases, an optimal dataset of the plurality of operating variables V1, V2, V3 may be selected from the normal dataset of the plurality of operating variables V1, V2, V3. The normal dataset of the plurality of operating variables V1, V2, V3 may include the optimal dataset of the plurality of operating variables V1, V2, V3. By selecting the optimal dataset of the plurality of operating variables V1, V2, V3, the normal dataset of the plurality of operating variables V1, V2, V3 may exclude degraded portions due to the operation of the plurality of pneumatic components 110.

The temporal resolution of at least some of the plurality of sensors 120 may be on the order of milliseconds, and accordingly, each of the plurality of sensors 120 may sense and store the plurality of operating variables V1, V2, V3 at different timings. According to exemplary embodiments, the data points of each of the plurality of operating variables V1, V2, and V3 may be binned in set time intervals (e.g., one second) and representative values of the binned intervals may be selected to compensate for differences in the timing of the collection of the plurality of operating variables V1, V2, and V3. Here, the representative value of the plurality of operating variables V1, V2, V3 may be any one among a mean, a standard deviation, a median, a maximum, and a minimum value within the bins of the plurality of operating variables V1, V2, V3.

The normalization of the dataset of the plurality of operating variables V1, V2, V3 may be a standard normalization. Normalizing the dataset of the plurality of operating variables V1, V2, V3 may include dividing the plurality of operating variables V1, V2, V3 by the absolute value of the maximum value of each of the plurality of operating variables V1, V2, V3. Each of the plurality of operating variables V1, V2, V3 has a different value depending on the behavior of the associated one of the plurality of pneumatic components 110. Accordingly, some of the plurality of operating variables V1, V2, V3 may have relatively large absolute values compared to other parts of the plurality of operating variables V1, V2, V3.

The method of monitoring the equipment status described herein relies on a distance between a newly measured data point and a cluster of the dataset comprising the plurality of operating variables V1, V2, V3, such that if the dataset of the plurality of operating variables V1, V2, V3 and the newly measured data point of the plurality of operating variables V1, V2, V3 are not normalized, an unintended weight is applied to the plurality of operating variables V1, V2, V3.

For example, in the absence of normalization, an air cylinder having a relatively long forward travel time among the plurality of operating variables V1, V2, and V3 due to differences in driving modalities will have a greater importance for monitoring the equipment status than an air cylinder having a relatively short forward travel time among the plurality of operating variables V1, V2, and V3. According to exemplary embodiments, the importance of each of the plurality of operating variables V1, V2, V3 can be equalized by normalizing the dataset of the plurality of operating variables V1, V2, V3.

Furthermore, duplicates and missing data in the dataset of the plurality of operating variables V1, V2, V3 may skew the distribution of the dataset comprising the plurality of operating variables V1, V2, V3. According to exemplary embodiments, by removing duplicates and missing data in the dataset of the plurality of operating variables V1, V2, V3, the distortion of the distribution of the dataset used to generate the equipment monitoring model can be avoided, and the reliability of the pneumatic equipment 100 and the method of monitoring the pneumatic equipment 100 can be improved.

Next, the equipment monitoring model can be generated at P130. The equipment monitoring model may be included in the processor 140. The equipment monitoring model may be generated by the processor 140. According to exemplary embodiments, the equipment monitoring model may be generated based on a dataset of a plurality of operating variables V1, V2, V3. According to exemplary embodiments, the equipment monitoring model may be generated based on a normal dataset of the data plurality of operating variables V1, V2, V3. According to exemplary embodiments, the equipment monitoring model may be generated based on an optimal dataset of the data plurality of operating variables V1, V2, V3.

Generating the equipment monitoring model may include classifying any one among a dataset of the plurality of operating variables V1, V2, V3, a normal dataset of the plurality of operating variables V1, V2, V3, and an optimal dataset of the plurality of operating variables V1, V2, V3 into a plurality of clusters based on density. According to exemplary embodiments, the equipment monitoring model of the processor 140 may be generated by mean shift clustering.

Mean shift clustering may include using kernel density estimation (KDE) to obtain a probability density function of the centroid of a cluster, and shifting the centroid in a direction that increases the probability density function. The centroid movement may be repeated for a specified number of iterations, or may terminate when there is no movement of the cluster. The KDE may be defined according to the following equation.

$$KDE = \frac{\sum\limits_{i=1}^{n} K\left(\frac{x - x_i}{h}\right)}{nh}$$

Here, K is the kernel function, x is the value of the random variable, xi are the data points in the normal dataset of the data plurality of operating variables (V1, V2, V3), and h is the bandwidth. Setting the bandwidth is necessary for mean shift clustering. Mean shift clustering can provide more rigorous and flexible clustering because it does not require any settings for the shape of the dataset and the number of clusters.

Examples of kernels include the uniform kernel, triangular kernel, biweight kernel, Laplacian kernel, Cauchy kernel, square kernel, Epanechnikov kernel, normal kernel, and Gaussian kernel. A kernel is a positive-valued function that can satisfy a normalization condition and a symmetry condition.

According to exemplary embodiments, the equipment monitoring model of the processor 140 may be generated by any one among K-Means Clustering and Density Based Spatial Clustering of Applications with Noise (DBSCAN).

K-means clustering establishes cluster centroids and clusters data points based on the distance between the centroids and the data points. The centroids of the clustered clusters are shifted to the average point of the data, and the data points are re-clustered based on the shifted cluster centroids. In K-means clustering, the number of cluster centroids is preset in the design of the equipment monitoring model, and the iteration can be repeated until no centroids are moved.

DBSCAN involves finding the core points that satisfy the minimum number of data within the radius of the epsilon, and connecting the core points to each other if they are found in their neighbors. Here, neighboring points are other data points located within the radius of the epsilon. DBSCAN requires the setting of an epsilon radius and a minimum number of data points. In DBSCAN, the number of neighboring points of a Border Point is less than the minimum number of data points, but the neighboring points of a Border Point may include core points. In DBSCAN, the number of neighboring points of a Noise Point is less than the minimum number of data points, and the neighboring points of the Noise Point do not include core points.

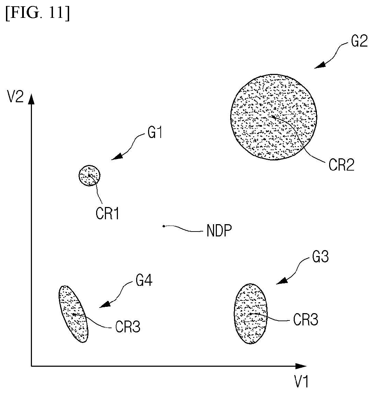

FIG. 11 is a graph to illustrate a method of monitoring an equipment, according to exemplary embodiments.

Referring to FIGS. 1, 2, and 11, at P140, the pneumatic equipment 100 may be monitored. The pneumatic equipment 100 may be monitored by the processor 140. At P130, the datasets of the plurality of operating variables V1, V2, and V3, one of the normal datasets of the plurality of operating variables V1, V2, and V3 and the optimal datasets of the plurality of operating variables V1, V2, and V3 may be assigned to a plurality of clusters G1, G2, G3, and G4.

The following describes an example where the plurality of clusters G1, G2, G3, G4 is determined by the assignment of a normal dataset of the plurality of operating variables V1, V2, V3. In this case, the plurality of clusters G1, G2, G3, G4 may represent different phases of the pneumatic equipment 100 in normal operation.

For example, one of the plurality of clusters G1, G2, G3, G4 may be a non-operational cluster, another of the plurality of clusters G1, G2, G3, G4 may be an initial operational cluster, and another of the plurality of clusters G1, G2, G3, G4 may be a main operational cluster. The non-operational cluster may be a subcluster of the normal dataset of the plurality of operating variables V1, V2, V3 originating from a phase in which the pneumatic equipment 100 is not operating. The initial operational cluster may be a subcluster of the normal dataset of the plurality of operating variables V1, V2, V3 originating from a phase before each element (e.g., the plurality of pneumatic components 100) enters a steady state after the pneumatic equipment 100 starts operating. The main operational cluster may be a subcluster of the normal dataset of the plurality of operating variables V1, V2, V3 originating from a phase after each element (e.g., the plurality of pneumatic components 100) enters a steady state after the pneumatic equipment 100 starts operating.

The pneumatic equipment 100 may be monitored by a processor 140. The processor 140 may be configured to monitor the pneumatic equipment 100 based on data points of the operating variables V1, V2, V3 of the pneumatic equipment 100 and a equipment monitoring model.

Monitoring the pneumatic equipment 100 may include calculating distances of new data points (NDPs) collected from the plurality of sensors 120 from centroids C1, C2, C3, C4 of each of the clusters G1, G2, G3, G4 of the normal dataset. The processor 140 may be configured to calculate the distances of the data points (NDPs) from the centroids (C1, C2, C3, C4) of each of the clusters

(G1, G2, G3, G4) of the normal dataset.

In FIG. 11, a two-dimensional distance is shown for illustrative purposes, but the distance from the clusters G1, G2, G3, G4 may be a distance calculated in the same dimension as the data points in the dataset of the plurality of operating variables V1, V2, V3. For example, if the data points in the dataset of the plurality of operating variables V1, V2, V3 are M-dimensional, the distance from the cluster of normal datasets may be a distance calculated in an M-dimensional space.

According to exemplary embodiments, monitoring the pneumatic equipment 100 may further include calculating a score based on the distances of the data points from the clusters of the datasets of the plurality of operational variables V1, V2, V3. The score may be calculated by the processor 140. The score may be calculated based on representative values of distances between data points in the dataset of the plurality of operating variables V1, V2, V3 and clusters of data points (e.g., centroids of clusters). The representative value may be any one among a mean, a standard deviation, a median, a maximum, a minimum, and a minimum of the distances between the data points and the clusters (e.g., centroids of the clusters) of the dataset of the plurality of operating variables V1, V2, V3

The method of monitoring the equipment may further include generating an alarm based on the score. According to exemplary embodiments, the processor 140 may be configured to generate commands to control the operation of the pneumatic equipment 100 based on the comparison of the score and the threshold, or to provide an alarm to an operator. For example, the processor 140 may be configured to generate instructions to control the operation of the pneumatic equipment 100, or provide an alarm to an operator, if the score changes below the threshold, or if the score changes above the threshold.

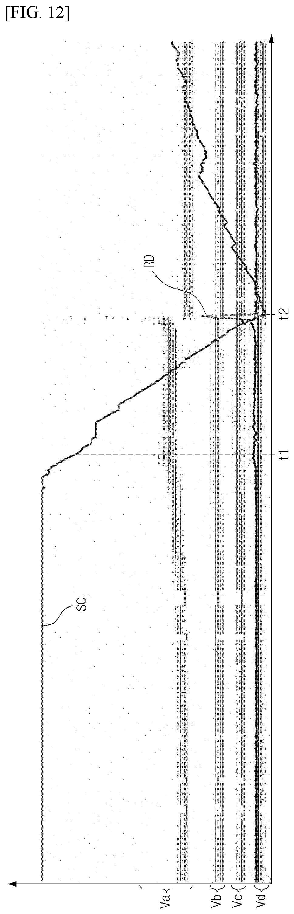

FIG. 12 illustrates the variation of the score according to an experimental example.

Referring to FIGS. 1, 2, 11, and 12, monitoring the pneumatic equipment 100 at P140 may include monitoring a score SC of data points (NDPs) originating from sensors 120 of the pneumatic equipment 100. In FIG. 12, new data points (NDPs) may be collected in real time, and accordingly, a score (SC) may be calculated in near real time. In FIG. 12, the representative distance (RD) and score (SC) may be calculated based on four plurality of operating variables (Va, Vb, Vc, Vd). The plurality of operating variables Va, Vb, Vc, Vd are examples of the plurality of operating variables V1, V2, V3 of FIG. 1.

At a first time point (t1), an alarm may be generated by a change in a score. At the first time point, a stratification of the plurality of operating variables Va, Vb, Vc, Vd is identified. The stratification of the plurality of operating variables Va, Vb, Vc, Vd means that the plurality of operating variables Va, Vb, Vc, Vd deviates from the normal state. Subsequently, a failure of the pneumatic equipment 100 is identified at a second time point (t2) adjacent to the first time point (t1). At the second time point t2, as the failure of the pneumatic equipment 100 occurs, a peak in the representative distance RD may occur, and a valley in the score SC may occur. In the experimental example of FIG. 12, it is confirmed that a method of monitoring a pneumatic equipment according to exemplary embodiments provides a prediction of a failure of the pneumatic equipment 100.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A pneumatic equipment monitoring method comprising:

    collecting a dataset of a plurality of operating variables of a pneumatic equipment comprising a plurality of pneumatic components; and generating an equipment monitoring model, wherein the equipment monitoring model comprises being generated by clustering the dataset of the plurality of operating variables based on density.

2. The pneumatic equipment monitoring method of claim 1, wherein the dataset of the plurality of operating variables is clustered based on Mean shift Clustering.

3. The pneumatic equipment monitoring method of claim 1, further comprising:

    collecting data points of the plurality of operating variables of the pneumatic equipment; and monitoring the pneumatic equipment based on the data points and the equipment monitoring model.

4. The pneumatic equipment monitoring method of claim 3, wherein the monitoring of the pneumatic equipment comprises calculating a score indicative of the status of the pneumatic equipment based on the distance of the data points from normal clusters determined based on clustering of a dataset of the plurality of operating variables.

5. The pneumatic equipment monitoring method of claim 4, further comprising:
generating an alarm based on the score.

6. The pneumatic equipment monitoring method of claim 1, further comprising:
pre-processing the dataset of the plurality of operating variables.

7. The pneumatic equipment monitoring method of claim 6, wherein
the pre-processing the dataset of the plurality of operating variables of the pneumatic equipment classifies the dataset of the plurality of operating variables of the pneumatic equipment based on an operational status of the pneumatic equipment.

8. The pneumatic equipment monitoring method of claim 7, wherein
the dataset of the plurality of operating variables is categorized into a normal dataset of the plurality of operating variables and a fault dataset of the plurality of operating variables.

9. The pneumatic equipment monitoring method of claim 8, wherein
the normal dataset of the plurality of operating variables comprises an optimal dataset of the plurality of operating variables.

10. The pneumatic equipment monitoring method of claim 8, wherein
the model is generated based on the normal dataset of the plurality of operating variables.

11. The pneumatic equipment monitoring method of claim 6, wherein
the pre-processing of the dataset of the plurality of operating variables standardizes the dataset of the plurality of operating variables of the pneumatic equipment.

12. The pneumatic equipment monitoring method of claim 6, wherein
the pre-processing of the dataset of the plurality of operating variables removes the duplicates and missing data of the dataset of the plurality of operating variables of the pneumatic equipment.

13. The pneumatic equipment monitoring method of claim 6, wherein
the pre-processing of the dataset of the plurality of operating variables synchronizes the time of the dataset of the plurality of operating variables of the pneumatic equipment.

14. A pneumatic equipment comprising:

a plurality of pneumatic components;

a sensor configured to detect a plurality of operating variables of the plurality of pneumatic components; and
a processor configured to collect a dataset of the plurality of operating variables, wherein
the processor comprises an equipment monitoring model generated by clustering of the dataset of the plurality of operating variables.

15. The pneumatic equipment of claim 14, wherein
the equipment monitoring model is generated by clustering the dataset of the plurality of operating variables based on density.

16. The pneumatic equipment of claim 14, wherein
the dataset of the plurality of operating variables is clustered based on Mean shift Clustering.

17. The pneumatic equipment of claim 14, wherein
the processor is configured to monitor the pneumatic equipment based on data points of the plurality of operating variables of the pneumatic equipment and the equipment monitoring model.

18. The pneumatic equipment of claim 17, wherein
the processor is configured to calculate distances of the data points from normal clusters determined based on clustering of the dataset of the plurality of operating variables.

19. The pneumatic equipment of claim 18, wherein
the processor is configured to calculate a score indicative of the status of the pneumatic equipment based on the distances of the data points from the normal clusters.

20. The pneumatic equipment of claim 19, wherein
the processor is configured to generate an alarm based on the score.

[FIG. 1]

100

110

[FIG. 2]

| COLLECTING DATASET OF OPERATING VARIABLES | ⌐P110 |

↓

| PRE-PROCESSING DATASET OF OPERATING VARIABLES | ⌐P120 |

↓

| GERNERATING EQUIPMENT STATUS MONITORING MODEL | ⌐P130 |

↓

| MONITORING SECONDARY BATTERY MANUFACTURING EQUIPMENT | ⌐P140 |

[FIG. 3]

[FIG. 4]

[FIG. 5]

[FIG. 6]

112P

112S2

112S1

112

ON→OFF

111

130

CONTROLLER

[FIG. 7]

EP 4 764 755 A1

[FIG. 8]

130
CONTROLLER

111

OFF

112

112S1

112S2

112P

[FIG. 9]

[FIG. 10]

[FIG. 11]

[FIG. 12]

**EP 4 764 755 A1**

## INTERNATIONAL SEARCH REPORT

| International application No. |
|---|
| **PCT/KR2024/096645** |

| | | |
|---|---|---|
| **A.** | **CLASSIFICATION OF SUBJECT MATTER** | |

**G05B 23/02**(2006.01)i; **G06F 18/23**(2023.01)i

According to International Patent Classification (IPC) or to both national classification and IPC

| **B.** | **FIELDS SEARCHED** |
|---|---|

Minimum documentation searched (classification system followed by classification symbols)

G05B 23/02(2006.01); F16K 31/60(2006.01); G05B 19/418(2006.01); G06N 20/10(2019.01); H04L 29/08(2006.01); H04L 43/00(2022.01); H04L 47/00(2022.01); H04W 4/38(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: manufacturing, air pressure, action variable, data set, collect, monitoring, model, density, grouping, Mean shift Clustering, distance, preprocessing

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2022-0062329 A (C3.AI, INC.) 16 May 2022 (2022-05-16)<br>See paragraphs [0012]-[0070]; claims 1-5; and figures 1-3. | 1-20 |
| Y | KR 10-2017-0068434 A (CHARGEPOINT TECHNOLOGY LIMITED) 19 June 2017 (2017-06-19)<br>See paragraphs [0081]-[0096]; claims 1-19; and figure 1. | 1-20 |
| A | KR 10-2022-0050255 A (MOISTURE OXYGEN TECHNOLOGY CO., LTD.) 25 April 2022 (2022-04-25)<br>See paragraphs [0043]-[0147]; and figures 1-4. | 1-20 |
| A | KR 10-2022-0003778 A (PYO, Hyung Joo) 11 January 2022 (2022-01-11)<br>See paragraphs [0087]-[0137]; and figures 1-7. | 1-20 |
| A | US 2019-0090105 A1 (AIRVIZ INC.) 21 March 2019 (2019-03-21)<br>See paragraphs [0005]-[0027]; and figure 1. | 1-20 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2025** | **13 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/096645**

| Patent document cited in search report | | | Publication date (day/month/year) | Patent family member(s) | | | Publication date (day/month/year) |
|---|---|---|---|---|---|---|---|
| KR | 10-2022-0062329 | A | 16 May 2022 | AU | 2020-345874 | A1 | 31 March 2022 |
| | | | | CA | 3154145 | A1 | 18 March 2021 |
| | | | | CN | 114730390 | A | 08 July 2022 |
| | | | | EP | 4028963 | A1 | 20 July 2022 |
| | | | | JP | 2022-548227 | A | 17 November 2022 |
| | | | | MX | 2022002953 | A | 12 July 2022 |
| | | | | US | 12181866 | B2 | 31 December 2024 |
| | | | | US | 2022-0260988 | A1 | 18 August 2022 |
| | | | | WO | 2021-050790 | A1 | 18 March 2021 |
| KR | 10-2017-0068434 | A | 19 June 2017 | AU | 2015-295060 | A1 | 16 February 2017 |
| | | | | BR | 112017001950 | A2 | 21 November 2017 |
| | | | | CA | 2956585 | A1 | 04 February 2016 |
| | | | | CN | 107076333 | A | 18 August 2017 |
| | | | | EP | 3195074 | A2 | 26 July 2017 |
| | | | | GB | 2554630 | A | 11 April 2018 |
| | | | | JP | 2017-524319 | A | 24 August 2017 |
| | | | | PH | 12017500169 | A1 | 10 July 2017 |
| | | | | RU | 2017106624 | A | 03 September 2018 |
| | | | | SG | 11201700680 | A | 27 February 2017 |
| | | | | US | 2017-0255189 | A1 | 07 September 2017 |
| | | | | WO | 2016-016652 | A2 | 04 February 2016 |
| | | | | WO | 2016-016652 | A3 | 14 July 2016 |
| KR | 10-2022-0050255 | A | 25 April 2022 | None | | | |
| KR | 10-2022-0003778 | A | 11 January 2022 | KR | 10-2476940 | B1 | 12 December 2022 |
| US | 2019-0090105 | A1 | 21 March 2019 | CN | 108770367 | A | 06 November 2018 |
| | | | | EP | 3414601 | A1 | 19 December 2018 |
| | | | | JP | 2019-525274 | A | 05 September 2019 |
| | | | | WO | 2017-204866 | A1 | 30 November 2017 |
| | | | | WO | 2017-204866 | A8 | 26 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230179446